(19) Europäisches Patentamt

European Patent Office

Office européen des brevets

(11) **EP 0 711 419 B1**

(12) **FASCICULE DE BREVET EUROPEEN**

(45) Date de publication et mention de la délivrance du brevet:
**12.11.1997 Bulletin 1997/46**

(21) Numéro de dépôt: **94922916.5**

(22) Date de dépôt: **13.07.1994**

(51) Int Cl.$^6$: **G01V 5/00**

(86) Numéro de dépôt international:
**PCT/FR94/00878**

(87) Numéro de publication internationale:
**WO 95/04292 (09.02.1995 Gazette 1995/07)**

(54) **PROCEDE ET DISPOSITIF POUR DETECTER LA PRESENCE D'UN OBJET, COMPORTANT UN MATERIAU DONNE, NON ACCESSIBLE A LA VUE**

VERFAHREN UND VORRICHTUNG ZUM FESTSTELLEN DER ANWESENHEIT EINES GEGENSTANDES AUS EINEM NICHT BESCHAUBAREN VORGEGEBENEN MATERIAL

METHOD AND DEVICE FOR CARRYING OUT DETECTION OF AT LEAST ONE NON-VISIBLE OBJECT CONTAINING A GIVEN MATERIAL

(84) Etats contractants désignés:
**AT BE CH DE DK ES FR GB GR IE IT LI LU MC NL PT SE**

(30) Priorité: **30.07.1993 FR 9309414**

(43) Date de publication de la demande:
**15.05.1996 Bulletin 1996/20**

(73) Titulaire: **EUROP SCAN**
**94533 Rungis Cédex (FR)**

(72) Inventeurs:
• **PERION, Didier**
**F-75013 Paris (FR)**
• **MAITRE-JEAN,Serge**
**F-75013 Paris (FR)**
• **SUNDERMANN, Dietmar**
**F-91400 Orsay (FR)**

(74) Mandataire: **Serin, Jean-Pierre**
**Cabinet Loyer,**
**78, avenue Raymond Poincaré**
**75116 Paris (FR)**

(56) Documents cités:
**EP-A- 0 358 965**          **US-A- 4 839 913**

**Description**

La présente invention concerne un procédé et un dispositif pour sa mise en oeuvre, destinés à détecter un ou plusieurs objet(s), comportant un matériau donné, le ou les objet(s) étant dissimulé(s) à la vue, et par exemple disposé (s) dans un conteneur ou enveloppe.

La présente invention est particulièrement applicable à la détection d'objets enfermés dans des bagages soumis à un contrôle ou inspection dans les aéroports ou les ports, avant l'embarquement des passagers. Plus particulièrement encore, l'invention est applicable à la détection de détonateurs utilisés pour déclencher l'explosion de matériaux explosifs. Les détonateurs contiennent des substances très particulières, tels que des sels de plomb par exemple.

On connaît des procédés et dispositifs de contrôle des bagages dans les aéroports et destinés à donner une image du contenu des bagages afin de détecter la présence éventuelle d'objets non réglementaires ou interdits, tels que armes et explosifs.

Les procédés et dispositifs connus fonctionnent sur le principe général suivant. Le conteneur, bagage ou autre, est irradié à l'aide d'un faisceau de rayons X, présentant un spectre d'énergie donné, puis on mesure la quantité de rayons X transmis à travers le conteneur, de façon à former une image du conteneur. La détection d'un objet recherché se fait donc par la reconnaissance visuelle de la forme de l'objet dans l'image formée.

Selon une variante de l'art antérieur, le spectre de rayons X incidents est séparé en deux parties, une partie pour les basses énergies et une partie pour les énergies plus élevées, de façon à rendre prépondérant un phénomène physique plutôt qu'un autre. Ainsi, l'effet de photoionisation est prépondérant aux basses énergies alors que l'effet Compton est prépondérant aux énergies plus élevées. La comparaison des intensités transmises à travers l'objet examiné des deux parties du spectre permet de séparer les corps de numéro acomique Z inférieur ou égal à 12 des autres corps.

Les méthodes de l'art antérieur présentent des inconvénients. Elles ne fournissent en fait que peu d'informations, en nombre insuffisant pour identifier la présence d'un corps en particulier.

Dans ce contexte, l'invention remédie à ces inconvénients et propose un procédé et un dispositif pour sa mise en oeuvre, permettant de détecter la présence d'un objet comportant un matériau donné, l'objet étant inaccessible à la vue, de manière fiable et rapide, ce qui en permet l'application notamment, par exemple, à la détection d'objets particuliers contenant un matériau donné et disposés dans des bagages, lors du contrôle de ces derniers dans les aéroports.

A cette fin, selon l'invention, le procédé pour détecter la présence d'au moins un matériau donné, contenu dans un objet, ledit matériau présentant un seuil de photoionisation caractéristique, dans lequel :

* on irradie l'objet par un faisceau collimaté de rayons X correspondant à une plage d'énergie contenant ledit seuil de photoionisation ;
* on détecte le faisceau transmis après passage au travers dudit objet ;

caractérisé en ce qu'en outre :

* on détermine une fonction continue représentative de l'atténuation ou de la transmission des rayons X en fonction de l'énergie ; et
* on recherche, sur la courbe représentant ladite fonction continue représentative de l'atténuation ou de la transmission, au voisinage de l'énergie correspondant audit seuil de photoionisation, l'existence d'un point d'inflexion caractéristique de la présence dudit matériau.

De préférence, le matériau présente un seuil K de photoionisation compris en 10 keV et 120 keV, et plus particulièrement le matériau présente un numéro atomique Z supérieur à 70.

Selon un exemple préféré de réalisation, le matériau est constitué de plomb ou tout composé de plomb (sel de plomb, ...).

Avantageusement, le faisceau comprend au moins deux bandes spectrales sensiblement contigües, disposées sensiblement de part et d'autre du seuil K d'énergie, caractéristique du matériau recherché.

Selon une mise en oeuvre avantageuse de l'invention, la fonction d'atténuation est déterminée de la façon suivante :

**A**) on exprime la fonction de transmission de l'objet comme un développement fini en puissances de la transmission "u" d'une épaisseur de référence d'un matériau de référence, chaque puissance de "u" étant affectée d'un coefficient, les puissances du développement étant égales à un rapport entre les épaisseurs préalablement déterminées du matériau de référence et l'épaisseur de référence ;

**B**) on détermine les coefficients du développement :

* en mesurant l'intensité d'un faisceau de mesure pour différents spectres en énergie ;
* pour chacun desdits spectres en énergie, on mesure l'intensité du faisceau transmis par chacune des épaisseurs considérées de matériaux de référence ;
* pour chacun desdits spectres en énergie, on mesure l'intensité du faisceau transmise par l'objet ;
* pour chacun desdits spectres en énergie, on décompose l'intensité du faisceau transmis par l'objet en une somme des intensités mesurées à l'étape ci-dessus, relatives au spectre considéré, ces intensités étant affectées des coefficients recherchés ;
* on résoud le système d'équations obtenues à l'étape ci-dessus ;

**C**) on déduit des étapes A et B, la fonction d'atténuation de l'objet exprimée en fonction de "u".

L'invention concerne également un dispositif pour la mise en oeuvre du procédé tel que décrit ci-dessus.

L'invention sera bien comprise à la lumière de la description qui suit se rapportant à un exemple illustratif et non limitatif, en référence au dessin annexé dans lequel :

- la figure 1 est un schéma synoptique de l'ensemble des étapes du procédé de l'invention ;
- la figure 2 est un schéma d'un dispositif de mise en oeuvre du procédé de l'invention ;
- la figure 3 montre l'exemple des bandes spectrales incidentes ;
- la figure 4 montre une représentation schématique des variations de la transmission en fonction de l'énergie pour les épaisseurs de référence ;
- la figure 5 montre un exemple de courbes obtenues expérimentalement, donnant les variations de la transmission en fonction de l'énergie ; et
- la figure 6 montre plusieurs courbes expérimentales des variations de l'atténuation en fonction de l'énergie, pour différents objets contenant des quantités de plomb différentes.

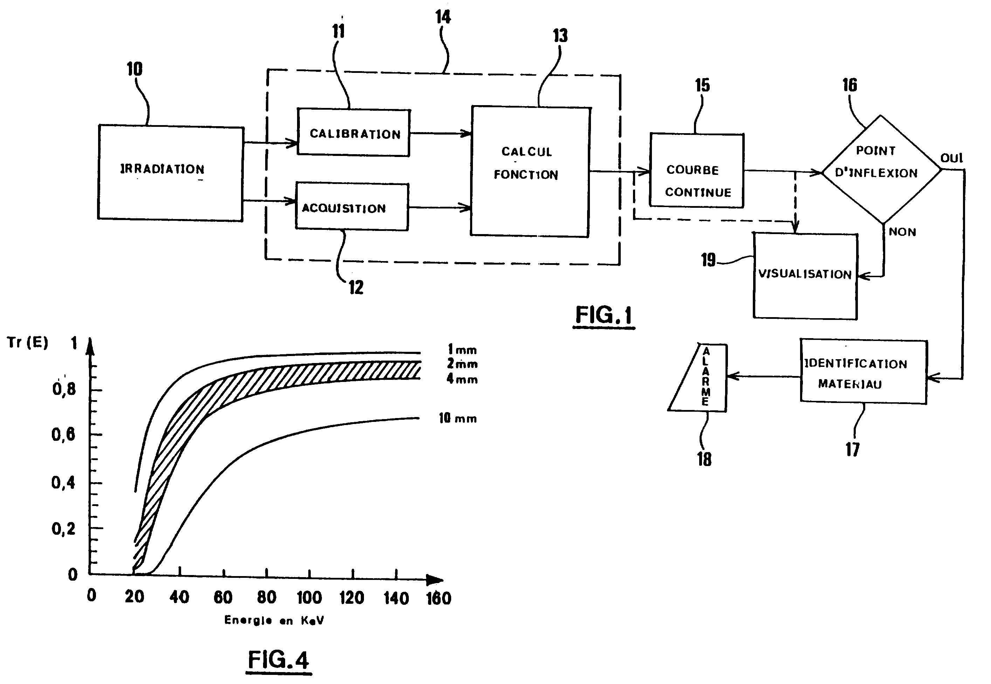

la figure 1 montre un schéma synoptique simplifié des étapes principales du procédé de l'invention dans l'application au contrôle et l'inspection de bagages, en vue de détecter la présence de détonateurs pour explosifs, les détonateurs contenant généralement du plomb ou du mercure. L'inspection est effectuée sur les bagages, sous forme de conteneur, valise, enveloppe, sac, ou autre objet similaire susceptible de contenir un grand nombre d'objets et en grande variété, et parmi lesquels est susceptible d'avoir été dissimulé un détonateur contenant du plomb, par exemple. Pour des raisons de commodité, il sera fait référence ci-après à un conteneur, étant entendu que ce vocable recouvre l'ensemble de tous les types de contenants mentionnés précédemment.

Dans un premier temps, le conteneur est irradié, bloc 10, par un faisceau de rayons X d'énergie donnée et de préférence sous la forme de faisceaux différents et présentant des bandes spectrales d'énergie jointives, comme expliqué ci-après. Les rayons X sont détectés pour réaliser, dans un premier temps une étape de calibration, bloc 11, et dans un second temps, une étape d'acquisition, bloc 12. A l'issue de la calibration et de l'acquisition, les données sont traitées en vue du calcul de la fonction de transmission du conteneur faisant l'objet du contrôle, bloc 13. Les étapes de calibration, acquisition, et calcul de la fonction de transmission sont regroupées dans un bloc fonctionnel 14, faisant appel à toute technique connue. A titre d'exemple, une telle technique est décrite dans la demande de brevet français au nom de la demanderesse, déposée le 28 mai 1993, sous le n° 93 06 449.

A la sortie du bloc fonctionnel 14, les données sont traitées dans le bloc 15 permettant de réaliser une courbe continue representative de la fonction de transmission. Il est bien entendu que la fonction d'atténuation peut être également utilisée, la transmission et l'atténuation étant reliées par une fonction exponentielle, de façon connue en soi.

A l'issue du bloc 15, la courbe ainsi obtenue est analysée de façon à détecter la présence d'un point d'inflexion, cette étape étant symbolisée par le bloc fonctionnel en forme de losange et portant la référence 16, à l'issue duquel, en la présence d'un point d'inflexion, le bloc fonctionnel 17 permet d'identifier le matériau par identification de l'énergie correspondant au point d'inflexion sur la courbe, et ensuite permet d'actionner une alarme 18, dans le cas où le matériau détecté est caractéristique d'un détonateur par exemple. Dans le cas d'absence de point d'inflexion sur la courbe, les données sont injectées dans un bloc fonctionnel 19 permettant de visualiser les objets disposés dans le conteneur. En option, une liaison directe peut être effectuée par l'issue du bloc fonctionnel 14 afin de permettre de visualiser sur écran les objets disposés dans le conteneur, à partir des informations résultant de la fonction d'atténuation ou de transmission.

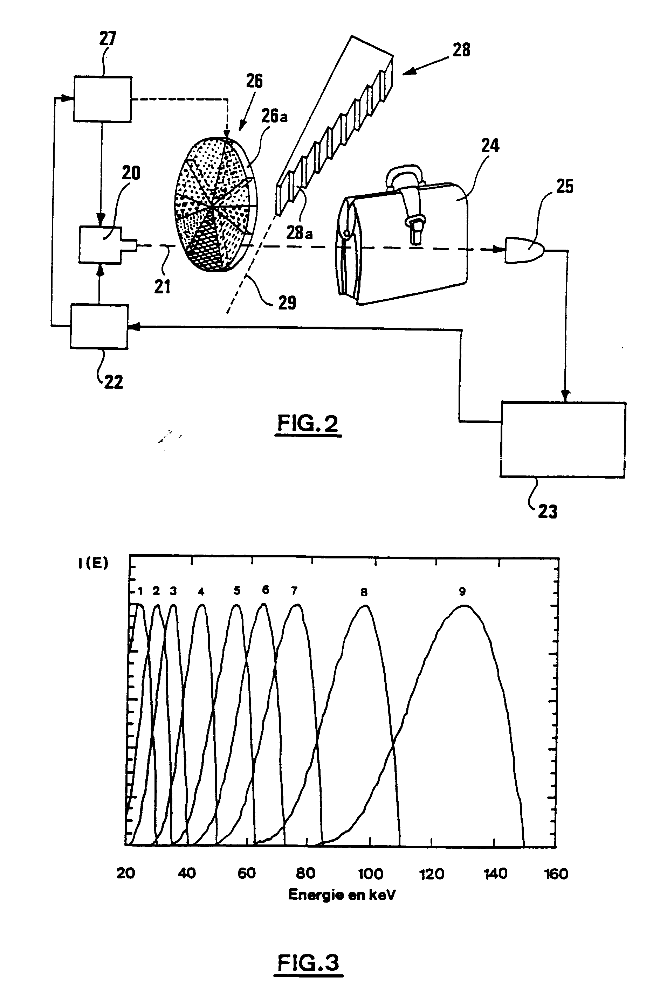

On décrit ci-après, en référence à la figure 2, les moyens permettant d'irradier, de détecter en vue de la calibration et de l'acquisition, et de calculer la fonction de transmission. Le dispositif ci-après décrit et représenté sur la figure 2 est du type connu et décrit dans la demande de brevet français mentionnée ci-dessus.

Le dispositif comprend une source 20 de rayons X (présentant une gamme d'énergie de 10 à 500 keV), en fonction de la gamme d'énergie souhaitée. La source 20 délivre un faisceau 21 dont l'énergie maximale est variable, sous l'effet de la commande 22 à potentiel variable, commandée par un système de commande et de traitement tel qu'un ordinateur 23.

Un conteneur 24 est disposé sur le trajet du faisceau 21 émis par la source 20. Un détecteur 25 est placé au-delà du conteneur 24 à contrôler, et sur le trajet du faisceau 21. Le détecteur 25 est relié à l'ordinateur de contrôle et de commande 23.

Afin d'irradier le conteneur 24 par des faisceaux correspondant à des bandes d'énergie spectrale différentes, jointives et de largeurs déterminées, on prévoit un système de filtre 26 permettant de placer sur le trajet du faisceau 21, entre la source 20 et le conteneur 24, des filtres différents, et plus précisément des filtres passe-haut, de types connus en eux-mêmes. Selon un mode de réalisation préféré et représenté sur la figure 2, le dispositif 26 de filtrage comprend une succession de filtres 26 A disposés sur un disque, de manière à ce que chaque filtre constitue un secteur angulaire donné du disque. Le disque 26 est entraîné en rotation par l'intermédiaire de moyens d'actionnement 27, reliés à la commande à potentiel variable 22. Ainsi, la commande de potentiel variable agissant sur la source 20 et la rotation du disque sont synchronisées, de manière à permettre d'émettre par la source 20 un faisceau d'énergie maximale, tandis que le filtre correspondant est mis en place sur le trajet du faisceau 21 afin d'effectuer une coupure passe-haut et engendrer une limite inférieure en énergie du faisceau. Le faisceau ainsi obtenu, et appelé à traverser le conteneur à contrôler, présente une bande spectrale définie. On réalise ainsi des faisceaux correspondant à des bandes spectrales d'énergie successives, sensiblement jointives ou se chevauchant légèrement, et telles que représentées, à titre d'exemple, sur la figure 3, chaque bande spectrale correspondant à un couple donné potentiel de commande/filtre. A titre d'exemple, le chevauchement est de l'ordre de 5 keV et les plages de bandes spectrales vont de 20 à 40 keV pour les énergies de 80 à 150 kev, et de 10 à 20 keV pour les énergies de 20 à 80 keV.

L'étape de calibration, symbolisée par le bloc fonctionnel 11 de la figure 1, est réalisée à l'aide d'une pièce de référence 28 de forme prismatique, à section triangulaire rectangle, et dont l'hypothénuse présente des marches d'escalier. Ainsi, dans le plan correspondant à l'hypothénuse, la pièce 28 présente des épaisseurs de matériaux différentes et successivement croissantes. La pièce 28 est constituée d'un matériau unique, par exemple du Duralumin (mélange composé de 95 % d'aluminium, 4,5 % de cuivre et 0,5 % de manganèse), et dont le nombre atomique Z effectif est d'environ 13,5. On pourrait également choisir un matériau dont le nombre atomique Z effectif est compris entre 5 et 26, pour un faisceau émis de rayons X.

On choisit une marche de la pièce de référence 28, à titre d'épaisseur de référence, ladite épaisseur de référence correspondant à la seconde marche dans l'exemple représenté, et portant la référence 28a. L'épaisseur de référence pour le Duralumin est comprise entre 1 et 5 mm, et par exemple égale à 4 mm. Dans le cas de l'acier, on choisit l'épaisseur de référence entre 0,5 et 2 cm, et par exemple égale à 1 cm.

Pour un nombre N d'épaisseurs de la pièce de référence 28, on fait appel à N + 1 spectres différents (figure 3). A titre d'exemple, pour 10 spectres différents, la pièce 28 comporte alors 9 marches d'escalier donc 9 épaisseurs différentes.

La pièce de référence 28 peut être déplacée en translation parallèlement à elle-même selon une direction symbolisée par la droite 29 de manière à être placée sur le trajet du faisceau 21 ou en dehors dudit faisceau. Le déplacement en translation de la pièce de référence 28 est effectué de manière connue et non représentée.

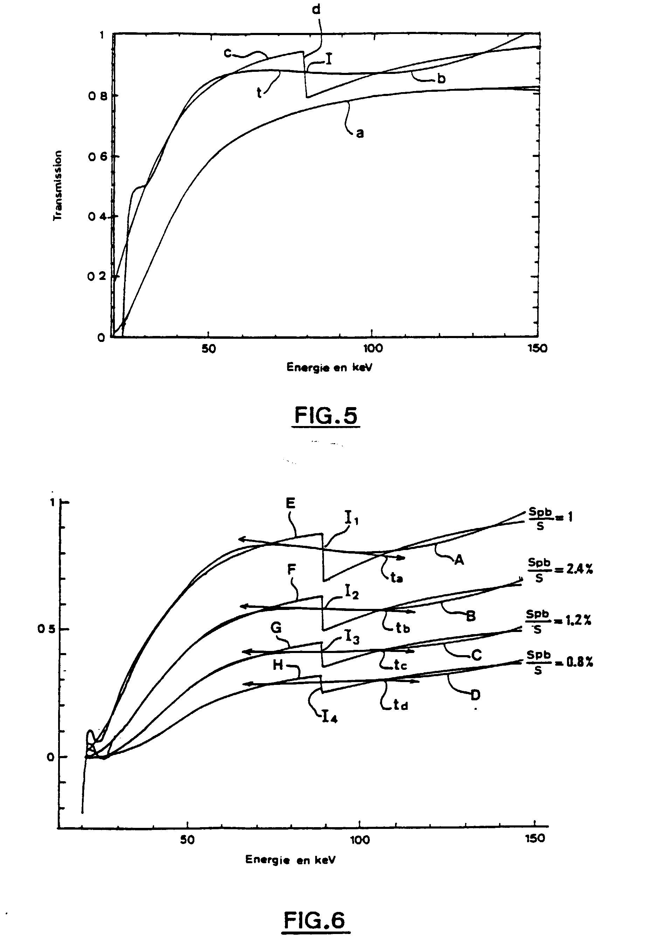

La figure 4 montre un exemple schématique de courbes de transmission, en fonction de l'énergie, d'une pièce 28 en Duralumin, et pour chacune des épaisseurs données, de 1 mm à 10 mm.

On décrit maintenant l'étape pour déterminer la fonction d'atténuation ou de transmission, correspondant au bloc fonctionnel 14.

Lors d'une étape préliminaire, on effectue des mesures de calibration consistant à mesurer l'intensité transmise par les différentes épaisseurs du matériau de référence soumises au faisceau de mesure 21. Dans un premier temps, on mesure cette intensité transmise pour une épaisseur nulle, c'est-à-dire sans que la pièce 28 soit interposée dans le trajet du faisceau. Le détecteur 20 mesure l'intensité du faisceau de mesure pour chacun des spectres et ces mesures sont mises en mémoire par le système de traitement 23.

Ensuite, on effectue des mesures similaires, en plaçant successivement sur le trajet du faisceau, les différentes épaisseurs de la pièce 28 de référence. Une fois ces mesures mises en mémoire par le système 23, la pièce 28 est retirée du trajet du faisceau.

L'étape de calibration est alors terminée.

Vient ensuite l'étape d'acquisition.

Le conteneur 24 à contrôler est alors placé sur le trajet du faisceau et ainsi soumis à chacun des spectres. L'intensité transmise par le conteneur est mesurée par le détecteur 20, puis mise en mémoire, pour chaque spectre.

Le système 23 déduit une formule analytique de la transmission de l'objet au point traversé par le faisceau, exprimée en fonction d'un paramètre "u" qui est la transmission d'une épaisseur donnée d'un matériau de référence, en Duralumin par exemple, comme décrit dans la description qui suit, se rapportant aux rayons X. La transposition au cas des rayons Gamma et de l'acier est immédiate. Pour épaisseur de référence, on choisit l'épaisseur de la seconde marche de la pièce bloc 28. "u" est donc égal à $e^{-att(E).2,7.0,4}$ où $att(E)$ est l'atténuation massique ; $2,7$ correspond à la densité du Duralumin exprimée en $g/cm^3$ ; $0,4$ correspond à l'épaisseur de référence choisie égale à 4 mm et exprimée en cm.

Si on définit l'indice **j** comme étant le numéro du spectre auquel est soumis le conteneur, **j = 1** correspondant au spectre d'énergie plus basse, alors l'intensité $D_j$ transmise par le conteneur s'exprime comme suit :

$$D_j = \int I_j (E)\, T_r (E)\, dE \qquad (0)$$

ou

$$D_j = \int I_j (E)\, e^{-att(E)}\, dE \qquad (1)$$

où $I_j (E)$ est l'intensité du **jème** spectre en énergie, fonction de l'énergie **E**, $T_r(E)$ et **att(E)** sont respectivement la fonction de transmission et d'atténuation exprimées ici en fonction de **E**.

En effectuant le changement de variable, faisant apparaître le paramètre "**u**" associé à l'épaisseur de référence ep (en cm) du matériau choisi de densités $\rho$ (en g/cm$^3$)

$$"u" = e^{-att(E)^{ep \cdot \rho}}$$

Dj s'écrit : $Dj = \int I'j(u)e^{-att'(u)}\, du \qquad (2)$

où $I'_j(u)$ est l'intensité du **jème** spectre exprimée en fontion de "**u**" et **att' (u)** est la fonction d'atténuation recherchée.

La fonction de transmission de l'objet est exprimée en fonction du paramètre "**u**", sur la base de l'approximation suivante : la fonction de transmission de l'objet est exprimée comme un développement polynomial fini en puissances du paramètre "**u**" ; soit :

$$e^{-att'(u)} = \sum_{i=0}^{N} a_i\, u^{f(i)} \qquad (3)$$

**i** est un indice qui varie de **0** à **N**. Le nombre de termes du développement (**N + 1**) est inférieur ou égal au nombre de spectres en énergies différentes utilisé pour les mesures de transmission ; il est par conséquent égal au nombre **N** d'épaisseurs de matériau de référence utilisées pour la calibration plus un. De ce fait, chaque indice **i** correspond à un numéro de marche de la pièce 28, l'indice **i = 0** correspondant à une épaisseur nulle, c'est-à-dire que la pièce 28 n'est pas dans le trajet du faisceau.

Pour chaque valeur de **i, f (i)**, puissance du développement, représente un rapport entre une des épaisseurs du matériau de référence et l'épaisseur de référence, le rapport étant de préférence tel que les puissances **f (i)** augmentées de **1/2** forment une suite géométrique de raison égale à une racine de trois, ce qui s'exprime :

$$f (i) + 1/2 = a^i\, (f (0) + 1/2) \qquad (4)$$

De plus, on choisit **f (0) = 0**, puisque **i = 0** correspond au trajet libre du faisceau et donc à une épaisseur nulle :

$$f (i) = (a^i - 1)/2 \qquad (5)$$

De cette manière, si la seconde marche 28a est choisie comme épaisseur de référence, on a :

$$f (2) = 1 \text{ et par conséquent } a = \sqrt{3}$$

On montre que l'intensité transmise par l'objet pour le spectre **j** peut se décomposer comme suit :

$$Dj = \sum_{i=0}^{N} a_i \, C_{ji} \qquad\qquad (6)$$

les termes $C_{ji}$ correspondent pour chaque spectre **j** à l'intensité transmise par les différentes épaisseurs de matériau de référence, **i = 0** correspondant à l'épaisseur nulle (la pièce 28 étant hors du trajet du faisceau).

Dans l'égalité (6), les termes $D_j$ et $C_{ji}$ sont déterminés par mesures, les coefficients $a_i$ sont inconnus. Le nombre d'épaisseurs de matériau de référence (en comptant en plus l'épaisseur nulle) peut être choisi inférieur ou égal au nombre de spectres pour que l'on puisse déterminer les coefficients $a_i$. Dans l'exemple décrit, on réalise dix spectres différents en énergie, la pièce 28 comporte 9 marches auxquelles il faut adjoindre les mesures supplémentaires effectuées lorsque la pièce 18 est hors de trajet du faisceau.

A l'aide des valeurs mises en mémoire lors de la calibration et des mesures d'acquisition, le système 23 détermine les $a_i$. Ceci peut être réalisé par toute méthode connue, par exemple par la méthode des moindres carrés.

Une fois les coefficients $a_i$ déterminés, le système 23 les remplace par leur valeur dans l'équation (3) et calcule ainsi la fonction de transmission du conteneur en fonction du paramètre "**u**".

Une fois la fonction de transmission déterminée, en fonction de l'énergie, l'étape suivante consiste à suivre l'évolution de cette fonction pour en rechercher une variation correspondant à un point d'inflexion de la courbe représentative de la fonction. La détermination de cette courbe, qui est continue, est symbolisée par le bloc fonctionnel 15 de la figure 1. La figure 5 montre trois courbes, à savoir une première courbe **a**, représentative de la réponse en transmission de la pièce de référence 28, une seconde courbe **b**, calculée mathématiquement comme indiqué précédemment et correspondant à la fonction de transmission d'un corps en platine et une troisième courbe c, correspondant à la transmission réelle d'un objet contenant un matériau spécifique, à savoir du platine. Cette courbe pourrait être obtenue expérimentalement en mesurant l'intensité transmise à travers le conteneur, en fontion de l'énergie des rayons X, à partir d'un faisceau de rayons X monoénergétique et en augmentant pas à pas l'énergie des rayons X incidents.

La courbe de référence "**a**" présente une première partie ascendante, suivie d'un plateau. La courbe "**b**" calculée, représentative de l'objet contenant du platine, présente une partie également ascendante, à des niveaux de transmission supérieurs à ceux de la courbe de référence "**a**", suivie d'un plateau légèrement descendant et suivie d'une troisième partie légèrement ascendante. La partie médiane de la courbe "**b**", correspondant au plateau descendant, comprend un point d'inflexion **I**, correspondant mathématiquement à un changement de courbure et s'exprimant par l'annulation de la dérivée seconde de la fonction représentative de la courbe "**b**". On a représenté par "**t**" la tangente au point **I** à la courbe "**b**".

La courbe "**c**" comporte également une partie ascendante correspondant sensiblement à la partie ascendante de la courbe "**b**". La courbe "**c**" comporte dans la partie correspondant à la partie médiane où se trouve le point d'inflexion **I** de la courbe "**b**", un décrochement ou discontinuité "**d**" situé à proximité du point d'inflexion **I** de la courbe "**b**". La troisième partie de la courbe "**c**" présente une allure sensiblement suivant la troisième partie correspondante de la courbe "**b**". Le segment "**d**" de la courbe "**c**" traduit la chute brusque de transmission du corps en platine, le phénomène correspondant au seuil **K** de photoionisation du platine et apparaîssant à une énergie donnée de 78,4 keV. Pour des valeurs inférieures à ce seuil, par exemple entre 65 et 78 keV, la courbe "**c**" est située au-dessus de la courbe "b".

Le procédé de l'invention, une fois établie la courbe représentative de l'objet ou du conteneur sous contrôle, comprend une étape de recherche d'un point d'inflexion, symbolisé par le bloc fonctionnel 16 (figure 1). La recherche d'un point d'inflexion peut être effectuée par toute méthode mathématique connue telle que, par exemple, la recherche de l'annulation de la dérivée seconde.

Dans l'hypothèse où un point d'inflexion est détecté, le procédé de l'invention procède alors à la détermination de la valeur de l'énergie correspondant audit point d'inflexion, et correspondant donc au seuil **K** de photoionisation du matériau, ayant provoqué l'apparition du phénomène sur la courbe de mesure "**b**". Le seuil **K** de photoionisation est caractéristique du matériau recherché. Cette étape est symbolisée par le bloc fonctionnel 17 sur la figure 1. Le procédé procède alors à l'actionnement d'une alarme en vue d'alerter les opérateurs de la présence d'un corps ou objet interdit, tel qu'un détonateur d'explosif par exemple, dans le cas de la détection du plomb. Dans cet exemple particulier, le seuil **K** est de 88 keV.

L'invention est, bien entendu, applicable à la détection d'autres corps et de préférence de matériaux dits lourds, c'est-à-dire de corps présentant un numéro atomique Z supérieur à 70. A titre d'exemple, le mercure (83 keV), l'or (80,7 keV), tungstène (69,5keV).

De préférence, les bandes spectrales sont choisies de manière qu'au moins deux bandes spectrales soient disposées de part et d'autre du seuil **K** d'énergie du matériau recherché, et soient jointives ou se chevauchant légèrement au niveau dudit seuil.

En référence à la figure 6, on a représenté différentes courbes correspondant chacune à la mesure de la transmission calculée, en fonction de l'énergie, d'un objet composé de PVC (polychlorure de vinyle), et de plomb, pour des pourcentages en plomb variant de 100 % à 0,8 %, les courbes présentant respectivement les références A, B, C et D. Ces courbes présentent des points d'inflexion respectivement $I_1$, $I_2$, $I_3$ et $I_4$, dont l'abscisse commune au voisinage de 88 keV correspond au seuil **K** de photoionisation du plomb. On a représenté sur la figure 6 une autre série de courbes, une pour chacune des courbes A à D, et correspondant à la transmission réelle d'un corps en plomb, pour la quantité correspondant à l'exemple. Ces courbes de transmission réelle peuvent être obtenues expérimentalement, comme indiqué précédemment pour la courbe c de la figure 5. A la courbe A, correspond la courbe E représentative de la transmission d'un objet comportant une masse de plomb correspondant (c'est-à-dire 0,05 g/cm$^2$). A la courbe B correspond une courbe F. A la courbe C correspond une courbe G. A la courbe D correspond une courbe H. Les courbes E, F, G et H, sont déterminées mathématiquement et comportent une discontinuité sous la forme d'un segment subvertical, passant par les points d'inflexion respectifs $I_1$ à $I_4$. on a représenté également sur chaque courbe A à D les tangentes $t_a$, $t_b$, $t_c$ et $t_d$, auxdites courbes, auxdits points d'inflexion respectifs $I_1$ à $I_4$.

On constate que plus la teneur en plomb augmente dans la masse totale de l'objet soumis à irradiation, plus la discontinuité ou le "saut" des courbes théoriques est important. Ceci se traduit par une augmentation de la pente (en valeur absolue) de la tangente correspondante, en chacun des points d'inflexion. En d'autres termes, plus la teneur en plomb, matériau recherché, est importante, plus le phénomène d'inflexion est marqué, et plus il est facile à détecter.

Bien que l'invention ait été décrite dans l'application à la détection de détonateurs d'explosifs, contenant du plomb, dans le cadre de contrôle de bagages, l'invention est suceptible d'être appliquée à d'autres domaines, tels que la détection de tout autre corps que du plomb.

En résumé, l'invention n'est pas limitée aux modes de réalisations décrits et représentés mais englobe toute variante telle que mentionnée dans les revendications ci-après.

**Revendications**

1. Procédé pour détecter la présence d'au moins un matériau donné contenu dans un objet, ledit matériau présentant un seuil de photoionisation caractéristique, dans lequel :

   * on irradie l'objet par un faisceau collimaté de rayons X correspondant à une plage d'énergie contenant ledit seuil de photoionisation ;
   * on détecte le faisceau transmis après passage au travers dudit objet ;

   caractérisé en ce qu'en outre :

   * on détermine une fonction continue représentative de l'atténuation ou de la transmission des rayons X en fonction de l'énergie ; et
   * on recherche sur la courbe représentant ladite fonction continue représentative de l'atténuation ou de la transmission, au voisinage de l'énergie correspondant audit seuil de photoionisation, l'existence d'un point d'inflexion, caractéristique de la présence dudit matériau.

2. Procédé selon la revendication 1, caractérisé en ce que ledit matériau présente un seuil K de photoionisation compris entre 10 keV et 120 keV.

3. Procédé selon l'une des revendications 1 ou 2, caractérisé en ce que ledit matériau présente un nombre atomique Z supérieur à 70.

4. Procédé selon la revendication 3, caractérisé en ce que le matériau comprend du plomb.

5. Procédé selon l'une des revendications précédentes, caractérisé en ce que la détermination de la fonction de transmission ou atténuation inclut les étapes suivantes :

   **A**) Exprimer la fonction de transmission ce l'objet comme un développement fini en puissances de la transmission "u" d'une épaisseur de référence d'un matériau de référence, chaque puissance de "u" étant affectée d'un coefficient, les puissances du développement étant égales à un rapport entre les épaisseurs préalablement déterminées du matériau de référence et l'épaisseur de référence ;
   **B**) Déterminer les coefficients du développement :

   **a.** en mesurant l'intensité du faisceau de mesure pour différents spectres en énergie,

**b.** pour chacun desdits spectres en énergie, en mesurant l'intensité du faisceau transmise par chacune des épaisseurs considérées de matériau de référence,

**c.** pour chacun desdits spectres en énergie, en mesurant l'intensité du faisceau transmise par l'objet,

**d.** pour chacun desdits spectres en énergie, en décomposant l'intensité du faisceau transmis par l'objet en une somme des intensités mesurées à l'étape B) b. relative au spectre considéré, ces intensités étant affectées des coefficients recherchés,

**e;** en résolvant le système d'équation obtenue à l'étape B) d.

**C)** Déduire des étapes A et B, la fonction de transmission ou atténuation de l'objet, exprimée en fonction de "u".

**6.** Application du procédé selon les revendications 1 et 4, à la détection de détonateurs d'explosifs.

**7.** Procédé selon la revendication 5, caractérisé en ce que lesdits spectres d'énergie sont tels qu'ils se recouvrent partiellement, et sont en nombre égaux au nombre d'épaisseurs de référence, augmenté de 1.

**8.** Dispositif pour détecter la présence d'au moins un matériau donné, disposé dans un objet comprenant :

* des moyens pour irradier le conteneur par un faisceau collimaté de rayons X ou Gamma correspondant à au moins une bande spectrale d'énergie ;
* des moyens pour détecter le faisceau transmis après passage au travers dudit objet ;
* des moyens pour déterminer une fonction représentative des variations de l'atténuation de la transmission en fonction de l'énergie ;

caractérisé en ce qu'il comporte, en outre :

* des moyens pour établir une courbe continue représentative de ladite fonction ;
* des moyens pour rechercher sur ladite courbe au moins un point d'inflexion ; et
* des moyens pour déterminer l'énergie correspondant audit point d'inflexion et, caractéristique dudit matériau détecté.

**9.** Dispositif selon la revendication 8, pour la détection, caractérisé en ce que ledit matériau est du plomb et ledit objet est un détonateur d'explosif.

**Patentansprüche**

**1.** Verfahren zur Erfassung des Vorhandenseins zumindest eines in einem Objekt enthaltenen bestimmten Materials, wobei das Material eine charakteristische Photoionisationsschwelle aufweist, wobei bei dem Verfahren:

* das Objekt mit einem gebündelten Röntgenstrahl bestrahlt wird, der einem die Photoionisationsschwelle enthaltenden Energiebereich entspricht,
* nach dem Hindurchtreten durch das Objekt der durchgelassene Strahl erfaßt wird,

**dadurch gekennzeichnet, daß:**

* eine die Dämpfung oder die Transmission des Röntgenstrahls als Funktion der Energie wiedergebende stetige Funktion bestimmt wird, und
* im Verlauf der Kurve, die die stetige Funktion darstellt, welche die Dämpfung oder die Transmission wiedergibt, in der Umgebung der der Photoinoisationsschwelle entsprechenden Energie nach dem Vorhandensein eines Inflexionspunktes gesucht wird, der für das Vorhandensein des Materials kennzeichnend ist.

**2.** Verfahren nach Anspruch 1,
**dadurch gekennzeichnet, daß**
das Material eine zwischen 10 keV und 120 keV liegende Photoionisationsschwelle K aufweist.

**3.** Verfahren nach Anspruch 1 oder 2,
**dadurch gekennzeichnet, daß**
das Material eine Atomzahl Z größer als 70 hat.

**4.** Verfahren nach Anspruch 3,
**dadurch gekennzeichnet, daß**
das Material Blei enthält.

**5.** Verfahren nach einem der vorhergehenden Ansprüche,
**dadurch gekennzeichnet, daß**
die Bestimmung der Funktion der Transmission oder der Dämpfung die folgenden Schritte umfaßt:

A) Ausdrücken der Funktion der Transmission des Objekts als eine endliche Entwicklung in Potenzen der Transmission "u" einer Bezugsdicke eines Bezugsmaterials, wobei jeder Potenz von "u" ein Koeffizient zugewiesen ist und die Potenzen der Entwicklung gleich einer Beziehung zwischen den vorab bestimmten Dicken des Bezugsmaterials und der Bezugsdicke sind;
B) Bestimmen der Koeffizienten der Entwicklung:

a. durch Messen der Intensität des Meßstrahls für verschiedene Energiespektren,
b. durch Messen, für jedes der Energiespektren, der Intensität des durch jede der berücksichtigten Dicken des Bezugsmaterials durchgelassenen Strahls,
c. durch Messen, für jedes der Energiespektren, der Intensität des durch das Objekt durchgelassenen Strahls,
d. durch Zerlegen, für jedes der Energiespektren, der Intensität des durch das Objekt durchgelassenen Strahls in eine Summe der bei Schritt B)b. gemessenen Intensitäten mit Bezug auf das berücksichtigte Spektrum, wobei den Intensitäten die gesuchten Koeffizienten zugeordnet sind, und
e. durch Auflösen des bei Schritt B)d. erhaltenen Gleichungssystems;

C) Herleiten, beruhend auf den Schritten A und B, der als Funktion von "u" ausgedrückten Funktion der Transmission oder der Dämpfung des Objekts.

**6.** Verwendung des Verfahrens nach den Ansprüchen 1 und 4 bei der Erfassung von Explosivstoff-Sprengzündern.

**7.** Verfahren nach Anspruch 5,
**dadurch gekennzeichnet, daß**
die Energiespektren derart sind, daß sie sich teilweise überdecken und ihre Anzahl gleich der um 1 erhöhten Anzahl der Bezugsdicken ist.

**8.** Vorrichtung zur Erfassung des Vorhandenseins zumindest eines in einem Objekt angeordneten bestimmten Materials, mit:

- Mitteln zur Bestrahlung des Behälters mit einem zumindest einem Energie-Spektralband entsprechenden gebündelten Röntgenstrahl oder γ-Strahl,
- Mitteln zur Erfassung des duchgelassenen Strahls nach dem Hindurchtreten durch das Objekt,
- Mitteln zur Bestimmung einer die Veränderungen der Dämpfung der Transmission als Funktion der Energie wiedergebenden Funktion,

**gekennzeichnet durch**

- Mittel zum Aufstellen einer die Funktion wiedergebenden stetigen Kurve,
- Mittel zum Suchen zumindest eines Inflexionspunktes im Verlauf der Kurve, und
- Mittel zum Bestimmen der dem Inflexionspunkt entsprechenden Energie, die für das erfaßte Material kennzeichnend ist.

**9.** Vorrichtung zur Erfassung nach Anspruch 8,
**dadurch gekennzeichnet, daß**
es sich bei dem Material um Blei handelt und es sich bei dem Objekt um einen Explosivstoff-Sprengzünder handelt.

**Claims**

**1.** A method for detecting the presence of at least one specific material contained in an object, said material evincing a characteristic photo-ionization threshold, wherein :

- the object is irradiated by a collimated x-ray beam within an energy range containing said photo-ionization threshold,

- the transmitted beam having passed through said object is detected,

further characterized in that

- a continuous function representing the x-ray attenuation or transmission in terms of energy is determined,

- a search is made for the existence of an inflection point on the curve representing said continuous function of attenuation or transmission in the vicinity of the energy corresponding to said photo-ionization threshold, said inflection point being characteristic of the presence of said material.

2. Method defined in claim 1, characterized in that said material evinces a photo-ionization threshold K between 10 KeV and 120 KeV.

3. Method defined in either of claims 1 and 2, characterized in that said material evinces an atomic number Z higher than 70.

4. Method defined in claim 3, characterized in that the material contains lead.

5. Method defined in one of the above claims, characterized in that the determination of the transmission or attenuation functions includes the following stages :

A) The object transmission function is stated in the form of a finite power expansion of the transmission u of a reference thickness of a reference material, a coefficient being assigned to each power of u, the expansion powers being equal to a ratio of the previously determined reference-material thicknesses to the reference thickness,

B) The expansion coefficients are determined :

(a) by measuring the test-beam intensity at different energy spectra,

(b) by measuring the beam intensity transmitted by each of the involved thicknesses of the reference material for each of said energy spectra,

(c) by measuring the beam intensity transmitted by the object for each of said energy spectra,

(d) by resolving the beam intensity transmitted by the object into a sum of the intensities measured in stage B) (b) relative to the spectrum involved for each of said energy spectra, the searched-for coefficients being assigned to said intensities,

(e) by solving the system of equations obtained in the step B) (d),

C) The object attenuation or transmission function in terms of u is derived from the stages A) and B).

6. Application of the method defined in claims 1 to 4 to detecting detonators/squibs for explosives.

7. Method defined in claim 5, characterized in that said energy spectra partly overlap and in that their number is equal to the number of reference thicknesses increased by 1.

8. Equipment for detecting the presence of at least one specified material present within an object, comprising :

- means irradiating the receptacle with a collimated x-ray or gamma-ray beam corresponding to at least one spectral energy band,

- means detecting the transmitted beam having passed through said object,

- means determining a function representing the changes in attenuation or transmission in terms of energy,

characterized in that
it comprises furthermore :

- means for obtaining a continuous curve representing said function,

- means looking for at least one inflection point on said curve, and

- means determining the energy corresponding to said inflection point and characteristic of said detected material.

9. Detection equipment defined in claim 8, characterized in that said material is lead and said object is a detonator/ squib for explosives.

EP 0 711 419 B1

FIG.1

FIG.4

FIG.2

I(E)

1  2  3   4    5   6   7      8        9

20    40    60    80    100    120    140    160

Energie en keV

FIG.3

**FIG.5**

**FIG.6**